# EUROPEAN PATENT SPECIFICATION

(11) **EP 1 433 663 B1**
(45) Date of publication and mention of the grant of the patent: **04.01.2006**
(21) Application number: 02732785.7
(22) Date of filing: 31.05.2002
(51) Int. Cl.: B60R 19/12, B60R 19/52, B60R 21/34, B62D 25/08

(54) **INTEGRATOR FRONT ELEMENT**
INTEGRIERTE FRONTELEMENTVORRICHTUNG
INTEGRATEUR FRONTAL

(30) Priority: 10.07.2001 ES 200101613
(43) Date of publication of application: 30.06.2004
(73) Proprietor: FPK S.A., 48170 Zamudio (ES)
(72) Inventor: NAREWSKI, Krzysztof B., Bo San Antolin, 48170 Zamudio (ES)
(74) Representative: Urteaga Simarro, José Antonio
(86) International application number: PCT/ES2002/000261
(87) International publication number: WO 2003/008238

(56) References cited:
- EP-A- 1 000 840
- EP-A- 1 072 476
- ES-T- 2 126 910
- US-A- 4 469 360

## Description

This invention makes reference to a front integration unit which has been specially designed for the front section of automobiles.

As far as is known, front integration units exist which have been built using a combination of plastic and metal components to obtain units, to which cross beams are then added following the connection - for example, the front bumper beam slightly more forward and the pedestrian protection beam on a lower section.

Generally speaking, the resistance of such front integration units is limited, and the construction process is laborious and complicated, manufacturing units which are relatively expensive and, in reiteration, whose resistance is somewhat restricted.

A front integration unit according to the preamble of claim 1 is known from EP 1 072 476 A. A plastic cover is added to this unit for optical reasons.

An objective of the invention is to provide a front integration unit which may be built at relatively reasonable cost.

In order to meet this objective, the front integration unit, in accordance with the invention, claims prior arrangement of a set of metal objects which are overmoulded in a single operation. The overmoulding covers these metal objects entirely or at least partially covers them, and thus it is unnecessary to add any auxiliary items for the purposes of configuration.

The set to be overmoulded at a later stage includes a central metal cross beam or car bumper, connected to an upper sub-assembly by metal reinforcements. The metal reinforcements are located close to the ends of the bumper beam.

The upper sub-assembly is structured as a cross beam which is shorter and of a smaller cross section than the bumper beam. At the ends of the bumper beam are attached another two pairs of beams, also shorter and of a smaller cross section than the cross beam. The shape of these pairs of beams is that of a U laid on its side and open to the sides, with the cross beam connecting around the bases of the U-sections.

The cross beam is located on a plane which is slightly forward with respect to the two pairs of U-beams.

From the point of view of positioning, the cross beam matches the upper position of the vehicle's radiator, whilst functionally it is used as an upper base for this component.

The two pairs of smaller side beams match the position of the vehicle's front headlights.

The reinforcements attaching this sub-assembly to the front bumper beam originate approximately in the area around the base of the two smaller beams, and so all this forms a block in which the bumper beam is in the most forward position.

There is a cross beam underneath the bumper beam and slightly behind with respect to the latter, and this cross beam is positioned in the pedestrian protection area. This protection beam is positioned vertically, between the bumper beam and the larger beam on the above-mentioned upper sub-assembly.

A solution as stated for the invention is that the bumper beam is first connected to the lower cross beam by metal reinforcements at a position coinciding on the vertical plane with the position of the two reinforcements connecting the bumper beam to the upper sub-assembly.

The pre-assembled unit, in accordance with the description, is situated inside a mould, and is thus overmoulded with plastic material to sheathe the assembly at least partially.

The sheathing process creates a single unit which gives the front integration unit extraordinary rigidity, and full integration of its components.

It should be mentioned for the appropriate purposes that the plastic overmould material can sheathe the aforementioned components either totally or partially, in accordance with the technical requirements of the actual overmoulding process, for example, or for any other reason, but in any case with no impairment whatsoever of the aforementioned qualities of rigidity and integration.

The front integration unit as designed is ready for assembly onto the vehicle, and connects to the various components and auxiliary fittings typical on such structures.

The drawings attached provide further details with regard to the characteristics of the invention. They show the following:
Figure 1 shows the front elevation of a front integration unit, in accordance with the invention.
Figure 2 shows a reduced perspective of this figure.
Figure 3 shows a partial perspective of the invention, setting out the connection areas between the central bumper beam and the upper sub-assembly and the lower pedestrian protection beam.
Figure 4 is a view of the I-I cross section shown in Figure 1.
Figure 5 is a view of the II-II cross section shown in Figure 1.

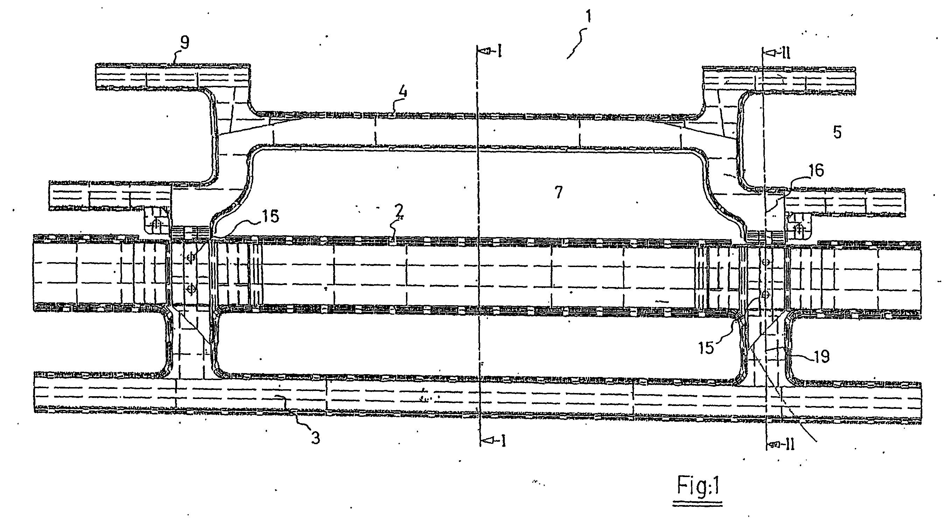

With regard to Figure 1, we should mention the front integration unit (1) with the central bumper beam (2). The bumper beam connects with the upper sub-assembly, which consists of the cross beam (4) and the two parallel side beams which create the recesses (5), underneath the upper beam (9) and also with the lower beam (3) for protection of pedestrians.

The front bumper beam (2) is connected to the upper sub-assembly via the reinforcement area (16) in proximity to the base of the U-shaped recess (5).

It is also connected to the lower beam (3) via the reinforcements (19). The reinforcements may be metal like the upper reinforcements (16), but the invention also claims that these may be plastic, obtained during the overmoulding process.

The unit shows other features - bolts, for example (15), fastened to the bumper beam in order to connect it to other parts of the vehicle, recess (7) for the radiator, and a number of other items which are not shown.

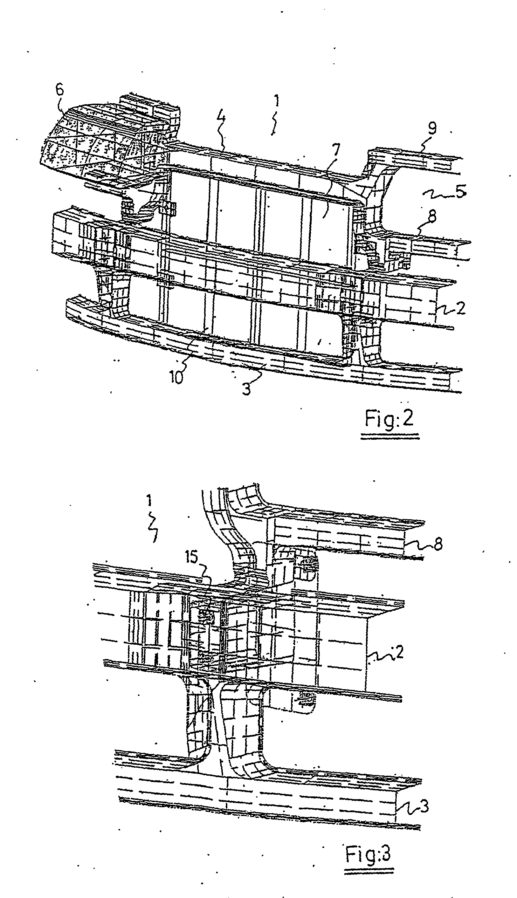

With regard to Figure 2, we may mention the arrangement of the various components - the front bumper beam (2) is slightly forward with respect to the pedestrian protection beam (3). The cross beam (4) to the upper sub-assembly is supported by the radiator, which occupies recess (7). This recess is behind the space created by the beam (2), and this beam is also behind with respect to the position of the cross beam (4). Recess (5) created by the two beams (8) and (9) is used for the vehicle's front headlight unit.

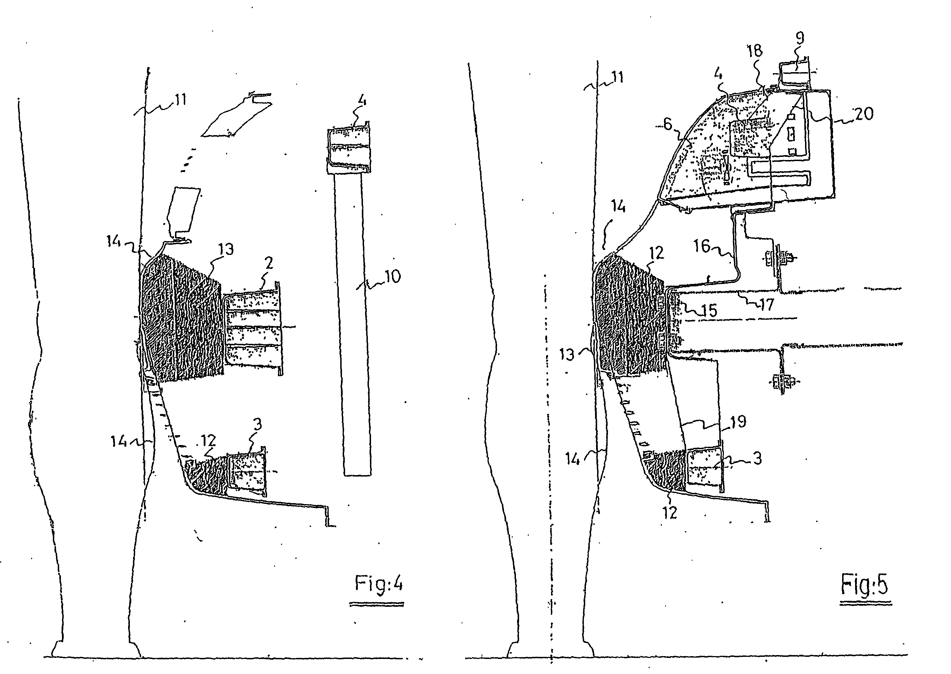

Figure 3 shows the two areas of connection of the front bumper beam to the upper and lower sections and, more specifically, area (15) for attachment of components onto the central beam.

Figure 4 shows the central position of the bumper beam (2) and the pedestrian protection beam (3) on the most salient front section of the vehicle (14), both with respect to position (11) representing a pedestrian.

Behind this front section, we observe the conventional areas for foam or similar (12), (13), positioned over the two beams (3), (2) belonging to the front integration unit, in accordance with the invention.

Behind these two beams we see the position of the cross beam (4) to the upper sub-assembly, from which the radiator (10) is suspended.

Figure 5 shows the position of the front integration unit in the invention towards one side and in relation to another pedestrian position (11), where the lower beam (3) is slightly back with respect to the bumper beam (2) on the front section (14) of the vehicle.

Figure 5 also shows a clearer view of the areas of transmission (19) from the central beam (2) to the protection beam (3) and (16) from the central beam to the upper sub-assembly, in addition to the position of the bolts (15) connecting the shock-absorber unit (17) to the front integration unit in the invention.

Above, we may also perceive the vehicle's headlight (6) underneath the upper beam (9), which lies slightly back in comparison, and the relative position of the beam (4) for suspension of the radiator, with the (18, 20) area as the base of the connection for the two beams farthest back (8), (9).

## Claims

1. A front integration unit, particularly for vehicles, adapted to the general lines of the vehicle's front bodywork, comprising:
- a bumper beam, consisting of a cross beam (2);
- metal reinforcements (16);
- an upper sub-assembly, consisting of a central beam (4), two pairs of side beams (R. 9) and metal components (19, 20);
- another lower beam (3);
- the cross-beam (2) being attached to the upper sub-assembly by the metal reinforcements (16);
- the central beam (4) being connected to the two pairs of side beams (8, 9) hy the metal components (19, 20);
- the radiator of the vehicle being suspended from the central beam (4):
- the side beams (8, 9) forming a space to house the headlights (6);
- the lower beam (3) serving as a protection for pedestrians;
being the front integration unit **characterised in that** the cross beam (2), the central beam (4), the side beams (8, 9) and the lower beam (3) arc overmoulded with plastic material.

2. A front integration unit, in accordance with Claim 1, **characterised in that** the beam (3) as protection for pedestrians is connected to the bumper beam (2) via a metal reinforcement.

3. A front integration unit, in accordance with Claim 1, **characterised in that** the beam (3) as protection for pedestrians is connected to the bumper beam (2) by the overmoulded plastic material.

4. A front integration unit, in accordance with Claim 1. **characterised in that** the overmoulded plastic material at least partially covers the beams and the reinforcements and The connections between them.

5. A front integration unit, in accordance with Claim 1, **characterised in that** the ovennoulded plastic material totally covers the beams and the reinforcements and the connections between them.

## Patentansprüche

1. Eine Einheit zum Einbau an der Vorderseite, insbesondere für Fahrzeuge, angepasst an den allgemeinen Aufbau des vorderen Teils der Karosserie eines Fahrzeugs, die Folgendes umfasst:
- einem Stoßfängerträger, bestehend aus einem Querträger (2);
- Verstärkungen aus Metall /16);
- einer oberen Unterbaugruppe, bestehend aus einem zentralen Träger (4), zwei Paar Holmen (8, 9) und Komponenten aus Metall (19, 20);
- einem weiteren unteren Träger (3);
- wobei der Querträger (2) an der oberen Unterbaugruppe durch die Verstärkungen aus Metall /16) angebracht ist;
- der zentrale Träger (4) durch die Komponenten aus Metall (19, 20) mit den zwei Paar Holmen (8, 9) verbunden ist;
- der Radiator des Fahrzeugs an dem zentralen Träger (4) aufgehängt ist;
- die Holme (8, 9) einen Raum bilden, um die Scheinwerfer (6) unterzubringen;
- und der untere Träger (3) als Schutz für Fußgänger dient;
wobei die Einheit zum Einbau an der Vorderseite **dadurch gekennzeichnet ist, dass** der Querträger (2), der zentrale Träger (4), die Holme (8, 9) und der untere Träger (3) mit Kunststoffmaterial umspritzt sind.

2. Eine Einheit zum Einbau an der Vorderseite, in Übereinstimmung mit Anspruch 1, **dadurch gekennzeichnet, dass** der als Schutz für Fußgänger dienende Träger (3) mit dem Stoßfängerträger (2) durch eine Verstärkung aus Metall verbunden ist.

3. Eine Einheit zum Einbau an der Vorderseite, in Übereinstimmung mit Anspruch 1, **dadurch gekennzeichnet, dass** der als Schutz für Fußgänger dienende Träger (3) mit dem Stoßfängerträger (2) durch das umspritzte Kunststoffmaterial verbunden ist.

4. Eine Einheit zum Einbau an der Vorderseite, in Übereinstimmung mit Anspruch 1, **dadurch gekennzeichnet, dass** das umspritzte Kunststoffmaterial die Träger und die Verstärkungen und die Verbindungen zwischen beiden mindestens teilweise abdeckt.

5. Eine Einheit zum Einbau an der Vorderseite, in Übereinstimmung mit Anspruch 1, **dadurch gekennzeichnet, dass** das umspritzte Kunststoffmaterial die Träger und die Verstärkungen und die Verbindungen zwischen beiden vollständig abdeckt.

## Revendications

1. Une unité de montage avant, particulièrement pour les véhicules, adaptée aux lignes générales de la carcasse avant du véhicule, comprenant :
- une poutre de pare-chocs, comprenant une traverse (2) ;
- des renforts en métal (16) ;
- un sous-ensemble supérieur, comprenant une poutre centrale (4), deux paires de poutres latérales (8, 9) et des pièces métalliques (19, 20) ;
- une autre poutre inférieure (3) ;
- la traverse (2) étant fixée au sous-ensemble supérieur par les renforts métalliques (16) ;
- la poutre centrale (4) étant reliée aux deux paires de poutres latérales (8, 9) par les pièces métalliques (19, 20) ;
- le radiateur du véhicule étant suspendu à la poutre centrale (4) ;
- les poutres latérales (8, 9) formant un espace pour loger les phares (6) ;
- la poutre inférieure (3) servant de protection pour les piétons ;
l'unité de montage avant étant **caractérisée par le fait que** la traverse (2), la poutre centrale (4), les poutres latérales (8, 9) et la poutre inférieure (3) sont surmoulées avec du matériau plastique.

2. Un ensemble de montage avant, conformément à la Revendication 1, **caractérisé par le fait que** la poutre (3) de protection des piétons est fixée à la poutre de pare-chocs (2) par un renfort métallique.

3. Un ensemble de montage avant, conformément à la Revendication 1, **caractérisé par le fait que** la poutre (3) de protection des piétons est fixée à la poutre de pare-chocs (2) par un matériau plastique surmoulé.

4. Un ensemble de montage avant, conformément à la Revendication 1, **caractérisé par le fait que** le matériau plastique surmoulé couvre au moins partiellement les poutres, les renforts et les connexions entre eux.

5. Un ensemble de montage avant, conformément à la Revendication 1, **caractérisé par le fait que** le matériau plastique surmoulé couvre totalement les poutres, les renforts et les connexions entre eux.
